# EUROPÄISCHE PATENTSCHRIFT

(11) **EP 2 963 395 B1**
(45) Veröffentlichungstag und Bekanntmachung des Hinweises auf die Patenterteilung: **01.01.2020**
(21) Anmeldenummer: 15172231.1
(22) Anmeldetag: 16.06.2015
(51) Int. Cl.: G01F 1/84

(54) **CORIOLIS-MASSEDURCHFLUSSMESSGERÄT**
CORIOLIS MASS FLOW MEASURING DEVICE
DÉBITMÈTRE MASSIQUE CORIOLIS

(30) Priorität: 30.06.2014 DE 102014109116
(43) Veröffentlichungstag der Anmeldung: 06.01.2016
(73) Patentinhaber: Krohne AG, 4019 Basel (CH)
(72) Erfinder: Wang, Tao, Rough Common, Canterbury, Kent CT2 9DG (GB); Rolph, Christoper, Northants, Northamptonshire NN72HA (GB); Jones, Gary, Northamptonshire, Northamptonshire NN156HU (GB)
(74) Vertreter: Gesthuysen Patent- und Rechtsanwälte

(56) Entgegenhaltungen:
- EP-A2- 0 553 939
- US-A- 4 738 143
- US-A- 4 876 898
- US-A1- 2003 010 136
- US-A1- 2004 221 661

## Beschreibung

Die Erfindung betrifft ein Coriolis-Massedurchflussmessgerät mit mindestens einem gebogenen Messrohr, mit einer sich zwischen dem einlaufseitigen und dem auslaufseitigen Ende des Messrohrs erstreckenden und die Messrohrenden fixierenden Tragbrücke, mit mindestens einem Schwingungserzeuger zur Anregung des Messrohrs zu Schwingungen, mit mindestens einem Schwingungsaufnehmer zur Aufnahme der Messrohrschwingungen, mit einer Auswertevorrichtung zur Auswertung der von dem Schwingungsaufnehmer aufgenommenen Messrohrschwingungen, und mit wenigstens einer an dem Schwingungsaufnehmer angeschlossenen Leiteranordnung zur Übertragung der aufgenommenen Messrohrschwingungen zur Auswertevorrichtung, wobei das Messrohr eine zentrale Biegung aufweist und sich das Messrohr zumindest mit seiner zentralen Biegung durch wenigstens eine Öffnung in der Tragbrücke von dem Innenbereich der Tragbrücke aus der Tragbrücke heraus in den Außenbereich der Tragbrücke erstreckt, und wobei der Schwingungsaufnehmer an dem Messrohr außerhalb der Tragbrücke befestigt ist und zwar außerhalb des geschlossenen Bereichs, der durch die Tragbrücke und den außerhalb der Tragbrücke verlaufenden Abschnitt des Messrohrs begrenzt wird.

Coriolis-Massedurchflussmessgeräte sind im Stand der Technik in einer Vielzahl von Ausgestaltungen bekannt. Massedurchflussmessgeräte, die nach dem Coriolis-Prinzip arbeiten, weisen üblicherweise wenigstens einen Schwingungserzeuger, mit dem das Messrohr zur Schwingung angeregt wird - oder ggf. auch mehrere Messrohre zur Schwingung angeregt werden -, sowie häufig zwei Schwingungsaufnehmer, mit denen die erzielte Schwingung oder die erzielten Schwingungen des Messrohrs erfasst werden, auf. Die Schwingungsaufnehmer sind üblicherweise ein- und auslaufseitig an dem Messrohr befestigt. Ohne Durchfluss sind die Signale der beiden Schwingungsaufnehmer im Wesentlichen phasengleich. Bei einem Massedurchfluss ergibt sich ein- und auslaufseitig eine unterschiedlich gerichtete Corioliskraft, die zu einer Phasenverschiebung zwischen den Auslenkungen und damit zwischen den beiden Signalen der Schwingungsaufnehmer führt, wobei die Phasenverschiebung proportional dem Massedurchfluss innerhalb des Messrohres ist.

Die Schwingungserzeuger und die Schwingungsaufnehmer sind meist derart aufgebaut, dass sie einen Permanentmagneten sowie eine Spule aufweisen, um auf elektrischem Wege Schwingungen auf die Messrohre zu übertragen bzw. Schwingungen der Messrohre zu erfassen.

Um eine einfache Anbindung des Coriolis-Massedurchflussmessgerätes an den Prozess zu ermöglichen, werden häufig Tragbrücken mit einem Eingangs- und einem Ausgangsflansch verwendet, in die das Messrohr mit seinen Enden eingesetzt ist. Innerhalb der Tragbrücke tritt das Messrohr oder die Messrohre eingangsseitig aus der Tragbrücke heraus und ausgangsseitig wieder in die Tragbrücke hinein. In der Tragbrücke ist das Messrohr so befestigt, dass das Messrohr durch die erfolgte Fixierung im wesentlichen nur außerhalb der Tragbrücke in Schwingungen versetzt werden kann. Häufig werden Knotenplatten eingesetzt, um die Schwingungsnullpunkte exakt festzulegen.

Der Anmelderin sind aus der Praxis Coriolis-Massedurchflussmessgeräte mit einem gebogenen Messrohr oder auch mehreren gebogenen Messrohren, einem Schwingungserzeuger, zwei Schwingungsaufnehmern und einer Tragbrücke bekannt, bei denen sich der Schwingungserzeuger innerhalb des geschlossenen Bereichs befinden, der durch die Tragbrücke und den außerhalb der Tragbrücke verlaufenden Abschnitt des Messrohrs oder der Messrohre begrenzt wird. Bei den aus dem Stand der Technik bekannten Coriolis-Massedurchflussmessgeräten wird die Leiteranordnung, mit der das von den Schwingungsaufnehmern aufgenommene elektrische Messsignal zur Auswertevorrichtung übertragen wird, mitunter an den Messrohren entlang geführt und an den Messrohren befestigt. Da die Messrohre durch Ihre Schwingung selbst Träger des Messsignals sind, kann nicht ausgeschlossen werden, dass die Führung der Leiteranordnung entlang des Messrohres die Messung beeinflusst, insbesondere sich die Führung der Leiteranordnung auf die Genauigkeit der Durchflussmessung und auch die Serienstreuung des Messgeräteverhaltens auswirkt. Gerade bei Messrohren mit geringem Querschnitt kann sich die Führung der Leiteranordnung über das Messrohr in der aufgezeigten Weise nachteilig auswirken, was natürlich nicht erwünscht ist.

Die EP 0 553 939 A2 zeigt beispielsweise ein Coriolis-Massedurchflussmessgerät mit zwei gebogenen Durchflussrohren und einer Tragbrücke, die die beiden Rohre hält. Der Schwingungserzeuger und die Schwingungsaufnehmer sind an zwei Trägern befestigt, die sich parallel zur Tragbrücke erstrecken und die Messrohre einrahmen. Bei einem Ausführungsbeispiel ist eine Leiterführungsstruktur auf einer Basisplatte angeordnet. Die Basisplatte befindet sich über der Tragbrücke. Die Leiterführungsstruktur ist in dem Bereich angeordnet, der durch die Tragbrücke und dem außerhalb der Tragbrücke verlaufenden Abschnitt der Messrohre begrenzt wird. Über die Leiterführungsstruktur wird ein elektrischer Leiter zu den Trägern geführt und von den Trägern zu den jeweiligen Schwingungsaufnehmern.

Die US 4 738 143 A offenbart ein Coriolis-Massedurchflussmessgerät, das für hohe Temperaturen ausgelegt ist. Das Coriolis-Massedurchflussmessgerät umfasst zwei gebogene Messrohre, einen Schwingungserzeuger und zwei Schwingungsaufnehmer, die mit einer Haltevorrichtung an den Messrohren angebracht sind. Das Coriolis-Massedurchflussmessgerät weist eine Tragbrücke auf, an der ein quaderförmiges Gehäuse angebracht ist. In dem Gehäuse ist eine innere Wand ausgebildet, die das Gehäuse in zwei Bereiche unterteilt. An der inneren Wand ist eine Kabelhalterung befestigt. An den Schwingungsaufnehmern ist ebenfalls eine Kabelhalterung befestigt. Die beiden Kabelhalterungen sind mit einem Kabel miteinander verbunden. Ausgehend von der an der inneren Wand befestigten Kabelhalterung werden weitere Kabel im Gehäuse geführt.

Der Erfindung liegt daher die Aufgabe zugrunde, ein Coriolis-Massedurchflussmessgerät anzugeben, bei dem die mit der Kontaktierung des Schwingungsaufnehmers durch die Leiteranordnung verbundenen Probleme zumindest teilweise vermindert werden.

Die zuvor hergeleitete Aufgabe ist bei einem gattungsgemäßen Coriolis-Massedurchflussmessgerät dadurch gelöst, dass an der Tragbrücke eine Leiterführungsstruktur angeordnet ist, sich die Leiterführungsstruktur in Richtung auf den Schwingungsaufnehmer erstreckt und die Leiteranordnung von dem Schwingungsaufnehmer direkt zur Leiterführungsstruktur geführt und dort fixiert ist.

Bei dem erfindungsgemäßen Coriolis-Massedurchflussmessgerät ist die Leiteranordnung folglich ohne Kontakt zu dem Messrohr, wodurch die Messgenauigkeit erhöht wird, da keine zusätzlichen Störeinflüsse von Leiteranordnungen hervorgerufen werden, die an dem Messrohr angebracht sind. Wenn es heißt, dass sich die Leiterführungsstruktur in Richtung auf den Schwingungsaufnehmer erstreckt, dann bedeutet dies, dass durch die Leiterführungsstruktur die freie Distanz zwischen der Tragbrücke und dem Montageort des Schwingungsaufnehmers reduziert wird, wodurch auch die Länge des ungeführten Teils der Leitungsanordnung reduziert wird. Durch die so realisierte geringe Länge des ungeführten Teils der Leiteranordnung wird die unerwünschte Beeinflussung der Messrohrschwingung weiter vermindert.

Ein weiterer Vorteil der Erfindung ist die Verringerung der Begrenzung der Messrohrform. Im Stand der Technik werden die Sensoren weitestgehend innerhalb des geschlossenen Bereichs montiert, der durch die Tragbrücke und das gebogene Messrohr gebildet wird. Dadurch kann das Messrohr nur in einem maximalen Winkel gebogen werden, bevor der geschlossene Bereich zu klein für die Anordnung der Sensoren wird. Werden die Schwingungsaufnehmer außerhalb dieses Bereichs befestigt, verringert sich der benötigte Platz innerhalb des geschlossenen Bereichs und das Messrohr kann weiter gebogen werden, was eine kompaktere Bauweise eines erfindungsgemäßen Coriolis-Massedurchflussmessgerätes begünstigt.

Eine Ausgestaltung der vorliegenden Erfindung sieht vor, dass die Leiterführungsstruktur bogenförmig ausgestaltet ist und sich im Wesentlichen senkrecht zur Längserstreckung - also von Messrohrende zu Messrohrende - der Tragbrücke erstreckt. Durch die Bogenform kann die Leiterführungsstruktur an zwei Bereichen an der Tragbrücke als separates Bauteil befestigt und über einer Öffnung oder einem offenen Bereich der Tragbrücke positioniert werden. Die Anordnung der Leiterführungsstruktur für die Führung der Leiteranordnung zu einer Auswertevorrichtung ist nicht auf eine im Wesentlichen senkrechte Ausrichtung der Leiterführungsstruktur begrenzt, so dass sie sich für einen günstigeren Fall auch schräg über der Tragbrücke erstrecken kann. Gemäß einer bevorzugten Ausgestaltung ist hier vorgesehen, dass die Leiterführungsstruktur ihren Fußpunkt auf der Tragbrücke ganz in der Nähe des Durchtrittspunktes des Messrohres durch die Tragbrücke hat und in ihrer Erstreckung in Richtung auf den Schwingungsaufnehmer im wesentlichen parallel zu dem Verlauf des Messrohres orientiert ist. Der Fußpunkt liegt dann natürlich ebenfalls außerhalb des geschlossenen Bereichs, der durch die Tragbrücke und den außerhalb der Tragbrücke verlaufenden Abschnitt des Messrohrs begrenzt wird.

Vorzugsweise wird der Schwingungserzeuger in einer weiteren Ausgestaltung in der Messrohrbiegung am Messrohr befestigt. Durch ein an der Tragbrücke befestigtes Leiterführungspodest, welches sich innerhalb des geschlossenen Bereichs befindet, der durch das Messrohr und die Tragbrücke gebildet wird, kann auf die gleiche Art und Weise die Leiteranordnung vom Schwingungserzeuger auf das Leiterführungspodest geführt und fixiert werden, ohne dass die Leiteranordnung des Schwingungserzeugers mit dem Messrohr kontaktiert ist. Der Schwingungserzeuger könnte auch außerhalb des geschlossenen Bereichs am Messrohr angebracht sein.

Eine weitere Ausgestaltung der Erfindung sieht vor, dass die Leiterführungsstruktur winkelförmig ausgestaltet ist und sich im Wesentlichen senkrecht zur Längserstreckung der Tragbrücke erstreckt. Durch die Winkelform überragt die Leiterführungsstruktur eine Öffnung oder einen offenen Bereich der Tragbrücke nur etwa zur Hälfte und ist an einem Bereich an der Tragbrücke als separates Bauteil befestigt, vorzugsweise verschweißt. Diese Ausgestaltung begünstigt eine Materialeinsparung, da eine winkelförmige Leiterführungsstruktur nur in etwa die Hälfte des Materials der Bogenform beansprucht. Die Leiterführungsstruktur kann zum Beispiel aus einem Metall oder einem anderen Material ausgebildet sein.

In einer besonders einfachen Ausgestaltung ist die Leiterführungsstruktur gerade ausgestaltet und erstreckt sich ebenfalls im Wesentlichen senkrecht zur Längserstreckung der Tragbrücke. Vorzugsweise wird die Leiterführungsstruktur dann durch ein gerades Blech oder einen geraden Stab gebildet.

Die Höhe der Leiterführungsstruktur wird so gewählt, dass sich das Plateau der Bogen- bzw. Winkelform der Leiterführungsstruktur bzw. einfach das freie Ende der Leiterführungsstruktur (im Falle der im Wesentlichen geraden Ausgestaltung) in relativer Nähe zum Schwingungsaufnehmer befindet. So wird die freie Distanz zwischen dem Schwingungsaufnehmer und der Tragbrücke reduziert. Auf diese Weise kann die freie Leiterstrecke der Leiteranordnung reduziert werden, ohne dass die Leiteranordnung über das Messrohr geführt ist.

In einer weiteren Ausgestaltung der Erfindung ist die Leiterführungsstruktur einstückig mit der Tragbrücke ausgebildet, sodass eine Befestigung, insbesondere Verschweißung, der Leiterführungsstruktur nicht notwendig ist.

Die Leiterführungsstruktur kann in einer Ausgestaltung der Erfindung Anschlusselemente aufweisen, sodass die Leiteranordnung der Schwingungsaufnehmer direkt an die Leiterführungsstruktur angeschlossen werden kann.

In einer weiteren Ausgestaltung der Erfindung ist die Tragbrücke zylinderförmig ausgebildet. Die Tragbrücke kann ein geschlossener Zylinder sein, der einlaufseitig und auslaufseitig mit Aussparungen versehen ist, um so dem gebogenen Messrohr oder den Messrohren zu ermöglichen, aus dem Innenbereich der Tragbrücke in den Außenbereich der Tragbrücke geführt zu werden. Durch die Biegung des Messrohres tritt dieses durch die gleiche oder eine weitere Öffnung wieder in den Innenbereich der Tragbrücke ein. An den Enden des Zylinders geht die Tragbrücke dann in Flansche über, in die jeweils ein Messrohrende mündet. Im Falle mehrerer Messrohre werden diese Messrohre in den Flanschen bzw. im Bereich der Flansche strömungsmäßig zusammengeführt. Schließlich wird der Zylinder über die Flanschverbindungen einlauf- und auslaufseitig in den Prozess eingebracht.

In einer anderen Ausgestaltung der Erfindung weist die Tragbrücke eine U-Profilform auf. Dabei ist sie so ausgerichtet, dass die offene Seite der U-Form als Öffnung für den Übergang des Messrohres vom Innenbereich in den Außenbereich dient. Die Leiterführungsstruktur kann an den hochgebogenen Seiten des U-Profils der Tragbrücke angebracht werden, oder aber einstückig mit ihr ausgebildet sein.

Eine weitere Ausgestaltung der Erfindung sieht vor, dass die Leiteranordnung als Kabelverbindung ausgebildet ist. Möglich wäre aber auch ein Leiter, der auf einer Folienplatine angebracht ist.

Im Einzelnen gibt es eine Vielzahl von Möglichkeiten, das erfindungsgemäße Coriolis-Massedurchflussmessgerät auszugestalten und weiterzubilden. Dazu wird verwiesen auf die dem Patentanspruch 1 nachgeordneten Patentansprüche und auf die nachfolgende Beschreibung von Ausführungsbeispielen in Verbindung mit der Zeichnung. In der Zeichnung zeigen:
- Fig. 1: ein Coriolis-Massedurchflussmessgerät gemäß einem bevorzugten Ausführungsbeispiel der Erfindung in einer perspektivischen Ansicht,
- Fig. 2: ein Coriolis-Massedurchflussmessgerät gemäß einem bevorzugten Ausführungsbeispiel der Erfindung im Schnitt,
- Fig. 3: eine vergrößerte Darstellung eines Teils des Coriolis-Massedurchflussmessgerätes gemäß Fig. 1 in einer perspektivischen Ansicht und
- Fig. 4: eine vergrößerte Darstellung eines Teils eines Coriolis-Massedurchflussmessgeräts gemäß eines weiteren bevorzugten Ausführungsbeispiels der Erfindung in einer perspektivischen Ansicht.

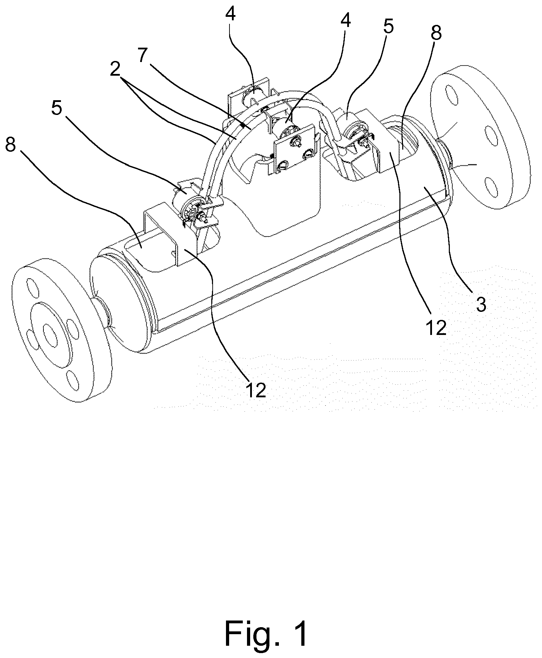

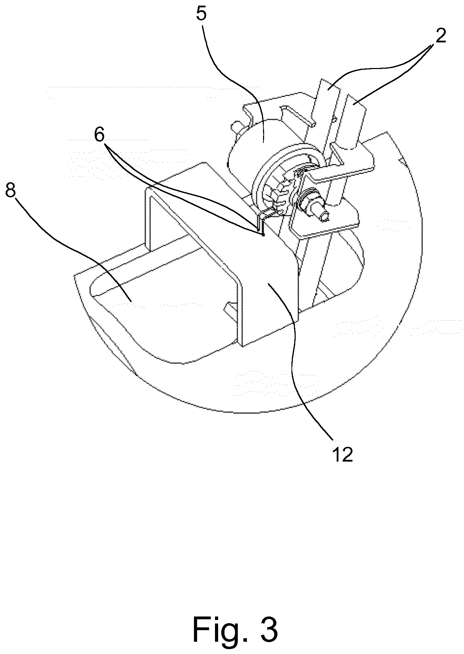

Aus Fig. 1 ist ein Coriolis-Massedurchflussmessgerät 1 gemäß einem bevorzugten Ausführungsbeispiel der Erfindung ersichtlich, das zwei zu Schwingungen anregbare Messrohre 2 aufweist, die an einer Tragbrücke 3 befestigt sind, die die Messrohre 2 ein- und auslaufseitig fixiert. Das Coriolis-Massedurchflussmessgerät 1 weist außerdem einen Schwingungserzeuger 4 und zwei Schwingungsaufnehmer 5 auf. Wie aus Fig. 3 besser ersichtlich, sind an den Schwingungsaufnehmern 5 Leiteranordnungen 6 befestigt, die zur Übertragung der aufgenommenen Messrohrschwingungen dienen. Die Leiteranordnungen 6 bestehen vorliegend aus einer Kabelverbindung, sie können in anderen Umsetzungen aber auch beispielsweise aus Leiterbahnen auf einer Folienplatine bestehen.

Die Tragbrücke 3 ist in dem in Fig. 1 dargestellten Ausführungsbeispiel zylinderförmig ausgestaltet. Es ist aber auch möglich, dass die Tragbrücke 3 die Form eines nach oben geöffneten U-Profils aufweist, oder eine denkbare ähnliche Form. Die Tragbrücke 3 dient dabei zur Stabilisierung und endseitigen Fixierung der Messrohre 2. Die Messrohre 2 weisen dabei eine zentrale Biegung 7 auf, sodass einlaufseitig aus einer Öffnung 8 in der Tragbrücke 3 heraustreten und auslaufseitig durch eine weitere Öffnung 8 wieder in die Tragbrücke 3 hineintreten. Bei einer nach oben gerichteten U-Profil-förmigen Tragbrücke 3, wäre eine solche Öffnung 8 über den gesamten Längsschnitt durch die nach oben offene Seite gegeben.

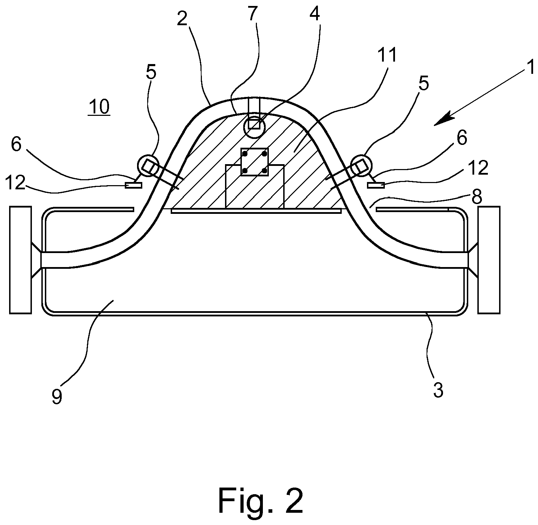

Fig. 2 zeigt eine Darstellung eines erfindungsgemäßen Coriolis-Massedurchflussmessgeräts 1 im Schnitt. Dadurch wird verdeutlicht, dass durch die Ausgestaltung der Tragbrücke 3 verschiedene Bereiche definiert werden. Zum einen ein Innenbereich 9 der Tragbrücke 3 und zum anderen ein Außenbereich 10 der Tragbrücke 3. Die Messrohre 2 verlaufen vom Innenbereich 9 der Tragbrücke 3 über den Außenbereich 10 und aufgrund der zentralen Biegung 7 zurück in den Innenbereich 9 der Tragbrücke. Ferner ergibt sich durch die Anordnung von Tragbrücke 3 und Messrohren 2 ein geschlossener Bereich 11, der durch die Tragbrücke 3 und die gebogenen Messrohre 2 begrenzt wird, wobei sich der geschlossene Bereich 11 bei Draufsicht auf die Ebene ergibt, in der die Messrohre 2 im Wesentlichen verlaufen.

Fig. 3 zeigt eine vergrößerte Darstellung eines Teils des Coriolis-Massedurchflussmessgerätes gemäß Fig. 1. Die Schwingungsaufnehmer 5 sind im Außenbereich 10 der Tragbrücke 3 und außerhalb des geschlossenen Bereichs 11 an den Messrohren 2 befestigt. Es ist eine Leiterführungsstruktur 12 so an der Tragbrücke 3 angeordnet, dass sich die Leiterführungsstruktur 12 in Richtung auf den Schwingungsaufnehmer 5 erstreckt. Durch die Leiterführungsstruktur 12 wird ein Aufnahmeort für die Leiteranordnung 6 des Schwingungsaufnehmers 5 geschaffen, der im Nahbereich des mit der Leiteranordnung 6 elektrisch kontaktierten Schwingungsaufnehmers 5 liegt. Die Leiteranordnung kann so direkt an der Leiterführungsstruktur 12 fixiert geführt und von dort ausgehend weiter geführt werden, ohne dass die Leiteranordnung 6 in Kontakt mit den Messrohren 2 kommt. Dadurch werden die Störeinflüsse der Leiteranordnung 6 auf die schwingenden Messrohre minimiert, die andernfalls durch eine Befestigung der Leiteranordnung 6 an den Messrohren 2 entstünden.

Das Ausführungsbeispiel gemäß Fig. 3 zeigt eine bogenförmige Ausgestaltung der Leiterführungsstruktur 12. Diese wird über den Öffnungen 8 der Tragbrücke 3 positioniert und an zwei Bereichen am Rande der Öffnung 8 befestigt. Im dargestellten Fall bestehen Tragbrücke 3 und Leiterführungsstruktur 12 aus Metall und sind miteinander verschweißt. Es ist aber ebenso denkbar, dass die Leiterführungsstruktur 12 einstückig mit der Tragbrücke 3 ausgebildet ist. Die Höhe der bogenförmigen Leiterführungsstruktur 12 ist dabei so gewählt, dass das Plateau des Bogens in relativer Nähe zum Schwingungsaufnehmer 5 ist, um möglichst kurze freie Strecken der Leiteranordnung 6 zu realisieren vom Schwingungsaufnehmer 5 zur Leiterführungsstruktur 12 zu realisieren. Auf der Leiterführungsstruktur 12, die aus Metall ist, sind Anschlusselemente ausgebildet, so dass die Leiteranordnung 6 direkt mit der Leiterführungsstruktur 12 verbunden ist.

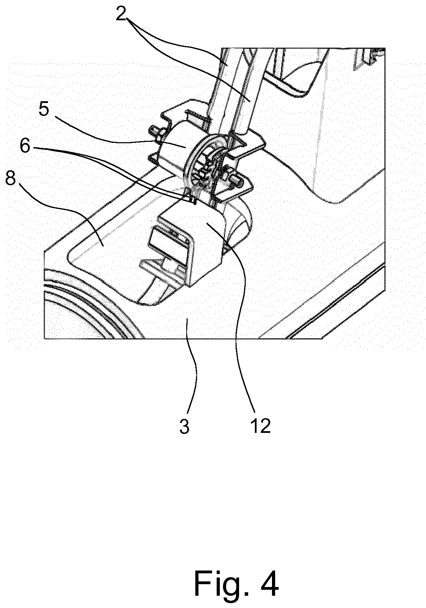

Fig. 4 zeigt ein weiteres Ausführungsbeispiel des erfindungsgemäßen Coriolis-Massedurchflussmessgerätes 1. Die Leiterführungsstruktur 12 ist nicht bogen- sondern winkelförmig ausgestaltet. Dadurch wird sie nur an einem Bereich an der Tragbrücke 3 befestigt; in einem nicht dargestellten Ausführungsbeispiel ist sie einstückig mit der Tragbrücke 3 ausgebildet. Die Leiterführungsstruktur 12 gemäß Fig. 3 reicht nur bis etwa zur Hälfte der Öffnung 8 der Tragbrücke 3, aber soweit, dass die Leiteranordnung 6 noch problemlos und mit minimaler Entfernung mit der Leiterführungsstruktur 12 verbunden ist. Die Leiterführungsstruktur 12 ist in etwa senkrecht zur Erstreckungsrichtung der Tragbrücke 3 ausgerichtet.

## Patentansprüche

1. Coriolis-Massedurchflussmessgerät (1), mit mindestens einem gebogenen Messrohr (2), mit einer sich zwischen dem einlaufseitigen und dem auslaufseitigen Ende des Messrohrs (2) erstreckenden und die Messrohrenden fixierenden Tragbrücke (3), mit wenigstens einem Schwingungserzeuger (4) zur Anregung des Messrohrs (2) zu Schwingungen, mit mindestens einem Schwingungsaufnehmer (5) zur Aufnahme der Messrohrschwingungen, mit einer Auswertevorrichtung zur Auswertung der von dem Schwingungsaufnehmer (5) aufgenommenen Messrohrschwingungen, und mit wenigstens einer an dem Schwingungsaufnehmer (5) angeschlossenen Leiteranordnung (6) zur Übertragung der aufgenommenen Messrohrschwingungen zur Auswertevorrichtung, wobei das Messrohr (2) eine zentrale Biegung (7) aufweist und sich das Messrohr (2) zumindest mit seiner zentralen Biegung (7) durch wenigstens eine Öffnung (8) in der Tragbrücke (3) von dem Innenbereich (9) der Tragbrücke (3) aus der Tragbrücke (3) heraus in den Außenbereich (10) der Tragbrücke (3) erstreckt, und wobei der Schwingungsaufnehmer (5) an dem Messrohr (2) außerhalb der Tragbrücke (3) befestigt ist und zwar außerhalb des geschlossenen Bereichs (11), der durch die Tragbrücke (3) und den außerhalb der Tragbrücke (3) verlaufenden Abschnitt des Messrohrs (2) begrenzt wird,
**dadurch gekennzeichnet,**
**dass** an der Tragbrücke (3) eine Leiterführungsstruktur (12) angeordnet ist, sich die Leiterführungsstruktur (12) in Richtung auf den Schwingungsaufnehmer (5) erstreckt und die Leiteranordnung (6) von dem Schwingungsaufnehmer (5) direkt zur Leiterführungsstruktur (12) geführt und dort fixiert ist, sodass durch die Leiterführungsstruktur (12) die freie Distanz zwischen der Tragbrücke (3) und dem Montageort des Schwingungsaufnehmers (5) reduziert ist, wodurch auch die Länge des ungeführten Teils der Leiteranordnung (6) reduziert ist.

2. Coriolis-Massedurchflussmessgerät (1) nach Anspruch 1, **dadurch gekennzeichnet, dass** die Leiterführungsstruktur (12) bogenförmig ausgestaltet ist und sich im Wesentlichen senkrecht zur Längserstreckung der Tragbrücke (3) innerhalb des Außenbereichs (10) der Tragbrücke (3) erstreckt.

3. Coriolis-Massedurchflussmessgerät (1) nach Anspruch 1, **dadurch gekennzeichnet, dass** die Leiterführungsstruktur (12) winkelförmig ausgestaltet ist und sich im Wesentlichen senkrecht zur Längserstreckung der Tragbrücke (3) innerhalb des Außenbereichs (10) der Tragbrücke (3) erstreckt.

4. Coriolis-Massedurchflussmessgerät (1) nach Anspruch 1, **dadurch gekennzeichnet, dass** die Leiterführungsstruktur (12) gerade ausgestaltet ist und sich im Wesentlichen senkrecht zur Längserstreckung der Tragbrücke (3) innerhalb des Außenbereichs (10) der Tragbrücke (3) erstreckt, die Leiterführungsstruktur (12) insbesondere durch ein gerades Blech oder einen geraden Stab gebildet wird.

5. Coriolis-Massedurchflussmessgerät (1) nach einem der Ansprüche 2 bis 4, **dadurch gekennzeichnet, dass** die Höhe der Leiterführungsstruktur (12) so gewählt ist, dass sich das Plateau der Bogen- bzw. Winkelform der Leiterführungsstruktur (12) in relativer Nähe zum Schwingungsaufnehmer (5) befindet.

6. Coriolis-Massedurchflussmessgerät (1) nach einem der Ansprüche 1 bis 5, **dadurch gekennzeichnet, dass** die Leiterführungsstruktur (12) aus Metall ist.

7. Coriolis-Massedurchflussmessgerät (1) nach einem der Ansprüche 1 bis 6, **dadurch gekennzeichnet, dass** die Leiterführungsstruktur (12) Anschlusselemente zum Anschluss der Leiteranordnung (6) des Schwingungsaufnehmers (5) aufweist.

8. Coriolis-Massedurchflussmessgerät (1) nach einem der Ansprüche 1 bis 7, **dadurch gekennzeichnet, dass** die Leiterführungsstruktur (12) einstückig mit der Tragbrücke (3) ausgebildet ist.

9. Coriolis-Massedurchflussmessgerät (1) nach einem der Ansprüche 1 bis 7, **dadurch gekennzeichnet, dass** die Leiterführungsstruktur (12) ein separates Bauteil ist, das an der Tragbrücke (3) befestigt ist.

10. Coriolis-Massedurchflussmessgerät (1) nach einem der Ansprüche 1 bis 9, **dadurch gekennzeichnet, dass** die Tragbrücke (3) zylinderförmig ausgestaltet ist und der Übergang vom Außenbereich (10) der Tragbrücke (3) zum Innenbereich (9) der Tragbrücke (3) durch Aussparungen in der Tragbrücke (3) realisiert ist.

11. Coriolis-Massedurchflussmessgerät (1) nach einem der Ansprüche 1 bis 10, **dadurch gekennzeichnet, dass** die Tragbrücke (3) eine U-Profilform aufweist und der Übergang vom Außenbereich (10) der Tragbrücke (3) zum Innenbereich (9) der Tragbrücke (3) durch die offene Seite des U-Profils realisiert ist.

12. Coriolis-Massedurchflussmessgerät (1) nach einem der Ansprüche 1 bis 11, **dadurch gekennzeichnet, dass** die Leiteranordnung (6) eine Kabelverbindung ist.

13. Coriolis-Massedurchflussmessgerät (1) nach einem der Ansprüche 1 bis 11, **dadurch gekennzeichnet, dass** die Leiteranordnung (6) durch einen Leiter auf einer Folienplatine realisiert ist.

## Claims

1. Coriolis mass flowmeter (1) having at least one bent measuring tube (2), having a carrier bridge (3) extending between the inlet side and outlet side end of the measuring tube (2) and fixing the measuring tube ends, having at least one oscillation generator (4) for exciting the measuring tube (2) to oscillations, having at least one oscillation sensor (5) for receiving measuring tube oscillations, having an evaluation unit for evaluating the measuring tube oscillations recorded by the oscillation sensor (5), and having at least one conductor arrangement (6) for transmitting the recorded measuring tube oscillations to the evaluation unit, wherein the measuring tube (2) has a central curve (7) and the measuring tube (2) extends, at least with its central curve (7) through at least one opening (8) in the carrier bridge (3) from the inner area (9) of the carrier bridge (3) out of the carrier bridge (3) into the outer area (10) of the carrier bridge (3), and wherein the oscillation sensor (5) is attached to the measuring tube (2) outside of the carrier bridge (3), namely outside of the closed section (11) that is limited by the carrier bridge (3) and the section of the measuring tube (2) running outside of the carrier bridge (3),
**characterized in**
**that** a waveguide (12) is arranged on the carrier bridge (3), the waveguide (12) extending in the direction of the oscillation sensor (5) and the conductor arrangement (6) being guided directly to the waveguide (12) from the oscillation sensor (5) and being fixed there, so that the free distance between the carrier bridge (3) and the mounting location of the oscillation sensor (5) is reduced by the waveguide (12), wherein the length of the unguided part of the conductor arrangement (6) is also reduced.

2. Coriolis mass flowmeter (1) according to claim 1, **characterized in that** the waveguide (12) has an arched design and extends essentially perpendicular to the longitudinal axis of the carrier bridge (3) within the outer area (10) of the carrier bridge (3).

3. Coriolis mass flowmeter (1) according to claim 1, **characterized in that** the waveguide (12) has an angled design and extends essentially perpendicular to the longitudinal axis of the carrier bridge (3) within the outer area (10) of the carrier bridge (3).

4. Coriolis mass flowmeter (1) according to claim 1, **characterized in that** the waveguide (12) has a straight design and extends essentially perpendicular to the longitudinal axis of the carrier bridge (3) within the outer area (10) of the carrier bridge (3), the waveguide (12), in particular, being formed by a flat sheet or a straight rod.

5. Coriolis mass flowmeter (1) according to any one of claims 2 to 4, **characterized in that** the height of the waveguide (12) is chosen so that the plateau of the arch shape or angle shape of the waveguide (12) is located relatively close to the oscillation sensor (5).

6. Coriolis mass flowmeter (1) according to any one of claims 1 to 5, **characterized in that** the waveguide (12) is of metal.

7. Coriolis mass flowmeter (1) according to any one of claims 1 to 6, **characterized in that** the waveguide (12) has connection elements for connection of the conductor arrangement (6) of the oscillation sensor (5).

8. Coriolis mass flowmeter (1) according to any one of claims 1 to 7, **characterized in that** the waveguide (12) is formed in one piece with the carrier bridge (3).

9. Coriolis mass flowmeter (1) according to any one of claims 1 to 7, **characterized in that** the waveguide (12) is a separate component that is attached to the carrier bridge (3).

10. Coriolis mass flowmeter (1) according to any one of claims 1 to 9, **characterized in that** the carrier bridge (3) has a cylindrical design and the transition from the outer area (10) of the carrier bridge (3) to the inner area of the carrier bridge (3) is implemented by recesses in the carrier bridge (3).

11. Coriolis mass flowmeter (1) according to any one of claims 1 to 10, **characterized in that** the carrier bridge (3) has a U profile and the transition from the outer area (10) of the carrier bridge (3) to the inner area (9) of the carrier bridge (3) is implemented by the open side of the U profile.

12. Coriolis mass flowmeter (1) according to any one of claims 1 to 11, **characterized in that** the conductor arrangement (6) is a cable connection.

13. Coriolis mass flowmeter (1) according to any one of claims 1 to 11, **characterized in that** the conductor arrangement (6) is implemented by a conductor on a film board.

## Revendications

1. Débitmètre massique de Coriolis (1), comprenant au moins un tube de mesure incurvé (2), un pont de support (3) s'étendant entre les extrémités côté entrée et côté sortie du tube de mesure (2) et fixant les extrémités du tube de mesure, au moins un générateur de vibrations (4) destiné à exciter le tube de mesure (2) pour l'amener à vibrer, au moins un capteur de vibrations (5) destiné à recevoir les vibrations du tube de mesure, un dispositif d'évaluation destiné à évaluer les vibrations du tube de mesure enregistrées par le capteur de vibrations (5) et au moins un ensemble de conducteurs (6) raccordé au capteur de vibrations (5) et destiné à transmettre les vibrations enregistrées du tube de mesure au dispositif d'évaluation, le tube de mesure (2) comportant une incurvation centrale (7) et le tube de mesure (2) s'étendant au moins avec son incurvation centrale (7) à travers au moins une ouverture (8) ménagée dans le pont de support (3) depuis la région intérieure (9) du pont de support (3) hors du pont de support (3) jusque dans la région extérieure (10) du pont de support (3), et le capteur de vibrations (5) étant fixé au tube de mesure (2) à l'extérieur du pont de support (3), c'est dire à l'extérieur de la région fermée (11) qui est limitée par le pont de support (3) et la partie du tube de mesure (2) qui s'étend à l'extérieur du pont de support (3) ,
**caractérisé en ce que**
une structure de guidage de conducteur (12) est disposée au niveau du pont de support (3), la structure de guidage de conducteur (12) s'étend en direction du capteur de vibrations (5) et l'ensemble de conducteur (6) est guidé depuis le capteur de vibrations (5) directement vers la structure de guidage de conducteur (12) et y est fixé de sorte que la structure de guidage de conducteur (12) réduit la distance libre entre le pont de support (3) et l'emplacement de montage du capteur de vibrations (5) de manière à réduire la longueur de la partie non guidée de l'ensemble de conducteur (6).

2. Débitmètre massique de Coriolis (1) selon la revendication 1, **caractérisé en ce que** la structure de guidage de conducteur (12) est conçue en forme d'arc et s'étend sensiblement perpendiculairement à l'extension longitudinale du pont de support (3) à l'intérieur de la région extérieure (10) du pont de support (3).

3. Débitmètre massique de Coriolis (1) selon la revendication 1, **caractérisé en ce que** la structure de guidage de conducteur (12) est conçue angulairement et s'étend sensiblement perpendiculairement à l'extension longitudinale du pont de support (3) à l'intérieur de la région extérieure (10) du pont de support (3).

4. Débitmètre massique de Coriolis (1) selon la revendication 1, **caractérisé en ce que** la structure de guidage de conducteur (12) est droite et s'étend sensiblement perpendiculairement à l'extension longitudinale du pont de support (3) à l'intérieur de la région extérieure (10) du pont de support (3), la structure de guidage de conducteur (12) étant formée notamment par une tôle droite ou une barre droite.

5. Débitmètre massique de Coriolis (1) selon l'une des revendications 2 à 4, **caractérisé en ce que** la hauteur de la structure de guidage de conducteur (12) est choisie de manière à ce que le plateau de la forme incurvée ou angulaire de la structure de guidage de conducteur (12) soit relativement proche du capteur de vibrations (5) .

6. Débitmètre massique de Coriolis (1) selon l'une des revendications 1 à 5, **caractérisé en ce que** la structure de guidage de conducteur (12) est en métal.

7. Débitmètre massique de Coriolis (1) selon l'une des revendications 1 à 6, **caractérisé en ce que** la structure de guidage de conducteur (12) comporte des éléments de raccordement destinés à raccorder l'ensemble de conducteur (6) du capteur de vibrations (5) .

8. Débitmètre massique de Coriolis (1) selon l'une des revendications 1 à 7, **caractérisé en ce que** la structure de guidage de conducteur (12) est formée d'une seule pièce avec le pont de support (3).

9. Débitmètre massique de Coriolis (1) selon l'une des revendications 1 à 7, **caractérisé en ce que** la structure de guidage de conducteur (12) est un composant séparé qui est fixé au pont de support (3).

10. Débitmètre massique de Coriolis (1) selon l'une des revendications 1 à 9, **caractérisé en ce que** le pont de support (3) est de forme cylindrique et la transition de la région extérieure (10) du pont de support (3) à la région intérieure (9) du pont de support (3) est réalisée par des évidements ménagés dans le pont de support (3).

11. Débitmètre massique de Coriolis (1) selon l'une des revendications 1 à 10, **caractérisé en ce que** le pont de support (3) a une forme de profilé en U et la transition de la région extérieure (10) du pont de support (3) à la région intérieure (9) du pont de support (3) est réalisée par le côté ouvert du profilé en U.

12. Débitmètre massique de Coriolis (1) selon l'une des revendications 1 à 11, **caractérisé en ce que** l'ensemble de conducteur (6) est une liaison par câble.

13. Débitmètre massique de Coriolis (1) selon l'une des revendications 1 à 11, **caractérisé en ce que** l'ensemble de conducteur (6) est réalisé par un conducteur sur un film de circuit imprimé.
